# EUROPÄISCHE PATENTSCHRIFT

(11) **EP 0 997 351 B1**
(45) Veröffentlichungstag und Bekanntmachung des Hinweises auf die Patenterteilung: **22.01.2003**
(21) Anmeldenummer: 99120420.7
(22) Anmeldetag: 14.10.1999
(51) Int. Cl.: B60R 21/06, B60P 7/15

(54) **Trenn- und/oder Rückhaltevorrichtung für Fahrzeuge, wie für Kombinationskraftwagen od. dgl.**
Separation and/or restraint device for vehicles such as multi-purpose motor vehicles or the like
Dispositif de séparation et/ou de rétention pour véhicules, comme des véhicules motorisés type break ou pareils

(30) Priorität: 15.10.1998 DE 19847583; 14.10.1999 DE 19949417
(43) Veröffentlichungstag der Anmeldung: 03.05.2000
(73) Patentinhaber: PETER BUTZ GmbH & Co Verwaltungs-KG, 40764 Langenfeld (DE)
(72) Erfinder: Labeur, Luc, 3010 Kessel-Lo (BE)
(74) Vertreter: Patentanwälte Ostriga & Sonnet

(56) Entgegenhaltungen:
- WO-A-91/12155
- DE-A- 4 010 209
- DE-A- 4 331 278
- GB-A- 2 224 303

## Beschreibung

Die Erfindung betrifft eine Trenn- und/oder Rückhaltevorrichtung für Fahrzeuge, wie für Kombinationskraftwagen od.dgl., entsprechend dem Oberbegriff des Anspruchs 1.

Die vorbeschriebene bekannte Rückhaltevorrichtung gemäß der DE 40 10 209 C2 weist eine horizontal und quer zur Fahrtrichtung hinter den Fondsitzlehnen eines Kombinationskraftwagens eingebaute Aufnahme-Halterung auf. Die Aufnahme-Halterung bildet ein Rollogehäuse mit einer Wickelwelle zur Aufnahme einer Netzbahn, welche mit ihrem inneren Rand an der Wickelwelle befestigt und entgegen einem Antriebsmoment, hier eines aufgezogenen Federmotors, vertikal ausziehbar und in der ausgezogenen Betriebsstellung fahrzeugseitig befestigbar ist.

Zur fahrzeugseitigen Befestigung weist der äußere Rand der Netzbahn eine letztere tragende Haltestange auf, deren in Haltestangenlängsrichtung aus Toleranzgründen axial verschiebliche Haltestangenenden jeweils an einer Abwinkelung zu einem patrizenkopfförmigen Steckelement verformt sind.

Zur lösbaren Aufnahme eines jeden Patrizenkopfes ist diesem eine fahrzeugseitig am Dachholm befestigte matrizenförmige Aufnahme zugeordnet, welche einen T-förmig hinterschnittenen, an einer Stirnseite einen Einführquerschnitt freilassenden Haltekanal bildet.

Die von der DE 40 10 209 C2 bekannte und in der Praxis bewährte Rückhaltevorrichtung wird als verbesserungsbedüftig empfunden, weil das Einschieben der haltestangenseitigen patrizenkopfförmigen Steckelemente in die fahrzeugseitig befestigten matrizenförmigen Steckelemente als recht umständlich empfunden wird.

Von der DE 39 38 776 C1 ist eine von einem Rollogehäuse horizontal ausziehbare Laderaumabdeckung bekannt, deren am äußeren Rand der Abdeckbahn angeordnete Haltestange ebenfalls zwei patrizenkopfförmig geformte Haltestangenenden bildet. Die Haltestangenenden wirken indessen nicht mit fahrzeugseitigen matrizenförmigen Steckelementen zusammen, sondern vielmehr mit einem Einhängeteil, das einen hakenförmigen Abschnitt mit einer vom Rollogehäuse abgewandten Hakenöffnung aufweist. Zur Erleichterung des Einhängens ist jeder Hakenöffnung ein trichtermantelseitig geschlitzter Einführtrichter vorgeschaltet, wobei die Öffnung des Trichters dem Rollogehäuse zugewandt ist und die Spitze des Trichters an der Hakenöffnung des Einhängeteils endet.

Von der DE 43 31 278 A1 (vgl. Fig. 3 in Verbindung mit Spalte 6 Zeilen 1-33) ist ein haltestangenloses vertikal aufgespanntes Trennetz mit einem randlichen Spannseil bekannt, welches durch Aufhängeösen geführt ist, deren den Ösenbereichen abgewandte Enden jeweils ein T-förmig hinterschnittenes Steckelement bilden, welches in eine entsprechend T-förmige Aussparung einsetzbar ist. Ein gegen Federkraft verschiebliches, auf dem Schaft des T-förmigen Steckelements gleitverschiebliches Hülsenteil verhindert durch Überdeckung der Verbindungsstelle, daß das T-förmige Steckelement aus der korrelierenden T-förmigen fahrzeugseitigen Öffnung herausgerückt werden kann.

Ausgehend von der eingangs beschriebenen Rückhaltevorrichtung gemäß der DE 40 10 209 C2, liegt der Erfindung die Aufgabe zugrunde, die bekannte Rückhaltevorrichtung so weiterzuentwickeln, daß diese eine unkomplizierte Befestigung der Haltestangenenden an den zugeordneten fahrzeugseitigen Befestigungsstellen gestattet.

Zur Lösung dieser Aufgabe sieht die Erfindung folgende Maßnahmen vor:
a) die fahrzeugseitige Befestigungsstelle weist einen sich in Einführrichtung des zugeordneten Haltestangenendes verengenden Einführtrichter auf;
b) in der Trichterspitze oder auf dem Trichterboden ist ein Steckelement angeordnet;
c) mit dem Steckelement in der Trichterspitze oder auf dem Trichterboden wirkt ein von dem zugehörigen Haltestangenende gebildetes komplementäres Steckelement zusammen, welchem ein insbesondere translatorisch bewegliches Riegelelement zugeordnet ist;
d) das Riegelelement ist mindestens mittelbar auf oder an dem Haltestangenende geführt und in seine Verriegelungsstellung hinein federbelastet.

Die fahrzeugseitige Befestigungsstelle weist demnach eine sich in Einführrichtung des zugeordneten Haltestangenendes verengenden Einführtrichter auf, der vorzugsweise einen im wesentlichen geschlossen umlaufenden Trichtermantel aufweist.

Die Trichteröffnung ist der Aufnahme-Halterung, z.B. dem Rollogehäuse, zugekehrt. In der Trichterspitze bzw. auf dem Trichterboden ist ein Steckelement angeordnet, welches ebenfalls zur Aufnahme-Halterung weist. Dem von dem zugehörigen Haltestangenende gebildeten Steckelement ist ein insbesondere translatorisch bewegliches Riegelelement zugeordnet, welches mindestens mittelbar auf dem bzw. am Haltestangenende geführt und in seine Riegelstellung hinein federbelastet ist und welchem haltestangenseitig eine Betätigungshandhabe zugeordnet ist.

Die erfindungsgemäße Trenn- und/oder Rückhaltevorrichtung gestattet eine bequeme Befestigung der beiden Haltestangenenden.

Die Befestigung geschieht derart, daß das betreffende Haltestangenende in die trichterförmige Einführöffnung eingesetzt und zum Trichtertiefsten hin in einem solchen Maße weitergeführt wird, bis das patrizenförmige und das matrizenförmige Steckelement miteinander verrasten.

Da das im Trichtertiefsten angeordnete fahrzeugseitige Steckelement unmittelbar zur Aufnahme-Halterung, z.B. zum Rollogehäuse hin, weist, ist keine komplizierte Rastbewegung sondern nur eine einfache Rastbewegung zum Ineinanderführen der beiden Steckelemente erforderlich.

Sobald die beiden Steckelemente miteinander verrastet sind, sorgt ein in Richtung auf die Steckverbindung bewegliches, insbesondere translatorisch verschiebliches, federbelastetes Riegelteil dafür, daß die Steckverbindung nur bewußt entgegen Federbelastung gelöst werden kann.

Zur Erleichterung der Riegelbetätigung ist der Haltestange eine Betätigungshandhabe zugeordnet.

In weiterer Ausgestaltung der Erfindung ragt aus dem Trichtertiefsten des Einführtrichters als patrizenförmiges Steckelement eine Stecköse in Richtung Aufnahme-Halterung, z.B. zum Rollogehäuse hin, vor.

Die Stecköse stellt zweckmäßig ein aus einem fahrzeugseitig befestigten Blechteil zungenartig herausgebogenes Ösenteil dar. Mit der patrizenartigen Stecköse arbeitet ein am Haltestangenende angeordnetes matrizenartiges, hülsen- bzw. muffenförmiges Bauteil zusammen, welches auch den in seine Riegelstellung hinein federbelasteten Riegel bzw. das Riegelteil oder das Riegelelement enthält. Derartige Steckelemente sind von Steckverschlüssen für Fahrzeug-Sicherheitsgurte grundsätzlich bekannt und beispielsweise in der DE 30 08 298 C2 beschrieben.

In weiterer Ausgestaltung der Erfindung ist im Trichtertiefsten des Einführtrichters als matrizenartiges Steckelement eine sich etwa quer zur Trichterachse erstreckende Aussparung vorgesehen, welche in Riegelstellung der Steckverbindung von einem hakenförmig ausgebildeten Haltestangenende hintergriffen ist.

Dabei bildet das Riegelelement einen Schieberiegel, welcher an der der Hakenfläche abgewandten Mäntelfläche der Haltestange letztere in der Rastöffnung hintergreift und so eine Aushakbewegung des Haltestangenendes blockiert. Der Schieberiegel ist in seine Riegelstellung hinein federbelastet.

Die Rastöffnung ist zweckmäßig von einem fahrzeugseitig befestigen Blech gebildet, welches zugleich den Boden bzw. das Tiefste des Einführtrichters darstellt.

Die Erfindung ist nicht auf vertikal ausziehbare Netzbahnen beschränkt, sondern ebenfalls auf Abdeckvorrichtungen mit horizontal ausziehbaren Abdeckbahnen anwendbar.

In den Zeichnungen ist ein bevorzugtes Ausführungsbeispiel entsprechend der Erfindung näher dargestellt, es zeigt,
Fig. 1 eine Schnittansicht in Fahrzeug-Fahrtrichtung eines in einer fahrzeugseitigen Befestigungsstelle verrasteten Haltestangenendes,
Fig. 2 eine gegenüber Fig. 1 verkleinerte Darstellung einer Schnittansicht, etwa entsprechend der in Fig. 1 mit II-II bezeichneten Schnittlinie,
Fig. 3 eine Teilansicht, etwa entsprechend dem in Fig. 2 mit III bezeichneten Ansichtspfeil,
Fig. 4 in Anlehnung an die Darstellung gemäß Fig. 1 eine andere Ausführungsform und
Fig. 5 eine gegenüber Fig. 4 verkleinerte Darstellung einer Schnittansicht, etwa entsprechend der mit V-V bezeichneten Schnittlinie in Fig. 4.

In den Zeichnungen sind für alle hinsichtlich ihrer Funktion miteinander vergleichbaren analogen Bauteile, trotz individueller Abwandlung, dieselben Bezugszeichen gewählt.

Eine Rückhaltevorrichtung 10 weist eine Haltestange 11 mit einem abgewinkelten Haltestangenende 12 und eine mit ihrem oberen bzw. äußeren Rand 13 an der Haltestange 11 befestigte Netzbahn 14 auf.

Innenseitig eines fahrzeugseitigen Dachholms 15 ist ein Blech 16 befestigt, aus welchem eine ein patrizenartiges Steckteil bildende Schließöse 17 zungenartig herausgebogen ist und dabei zugleich das benachbarte Dachholm-Blechteil 18 in einer nicht gezeigten Aussparung durchsetzt. Die Schließöse 17 bildet eine fensterartige oder anderweitig hinterschnittene Rastaussparung 19.

Die nicht dargestellte Aufnahme-Halterung für die Netzbahn 14, in diesem Falle ein Rollogehäuse, hat man sich in einem angemessenen Abstand A unterhalb etwa an dem mit R bezeichneten Ort vorzustellen. Die Schließöse 17 weist also in Richtung des Rollogehäuses R.

Das Haltestangenende 12 weist als matrizenförmiges Stekkelement eine Steckhülse bzw. eine Steckmuffe 20 auf. Innerhalb der Steckmuffe 20 ist in an sich bekannter Weise (vgl. DE 30 08 298 C2) ein in seine Riegelstellung hinein federbelastetes Riegelteil vorgesehen, welches in seiner Riegelstellung die Rastöffnung 19 quer durchgreift.

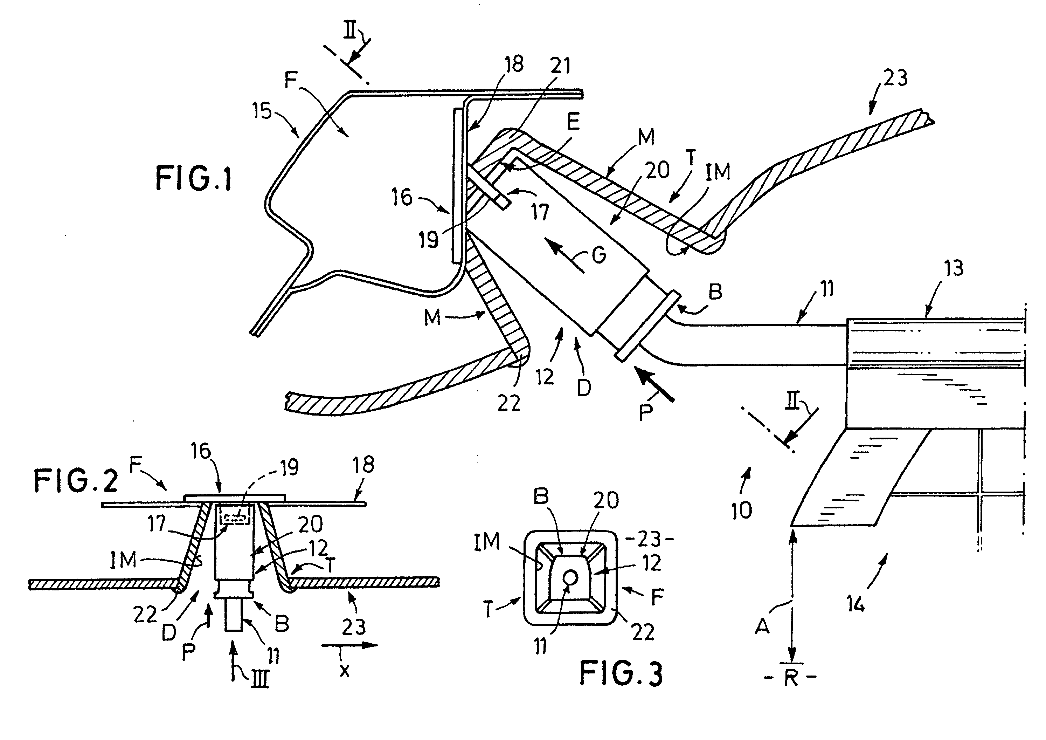

Zur Betätigung des aus Fig. 1 nicht ersichtlichen Riegelteils ist das Haltestangenende 11 mit einem innerhalb der Steckmuffe 20 gleitverschieblichen Betätigungssteil B versehen.

Wenn das Haltestangenende 12 aus der in Fig. 1 gezeigten Verriegelungsstellung gelöst werden soll, wird das Betätigungsteil B in Richtung des Pfeiles P entgegen einer Federrückstellkraft nach oben gedrückt, so daß das nicht gezeigte Riegelteil aus der Rastöffnung 19 herausgleiten und das Haltestangenende 12 nach unten hin abgezogen werden kann.

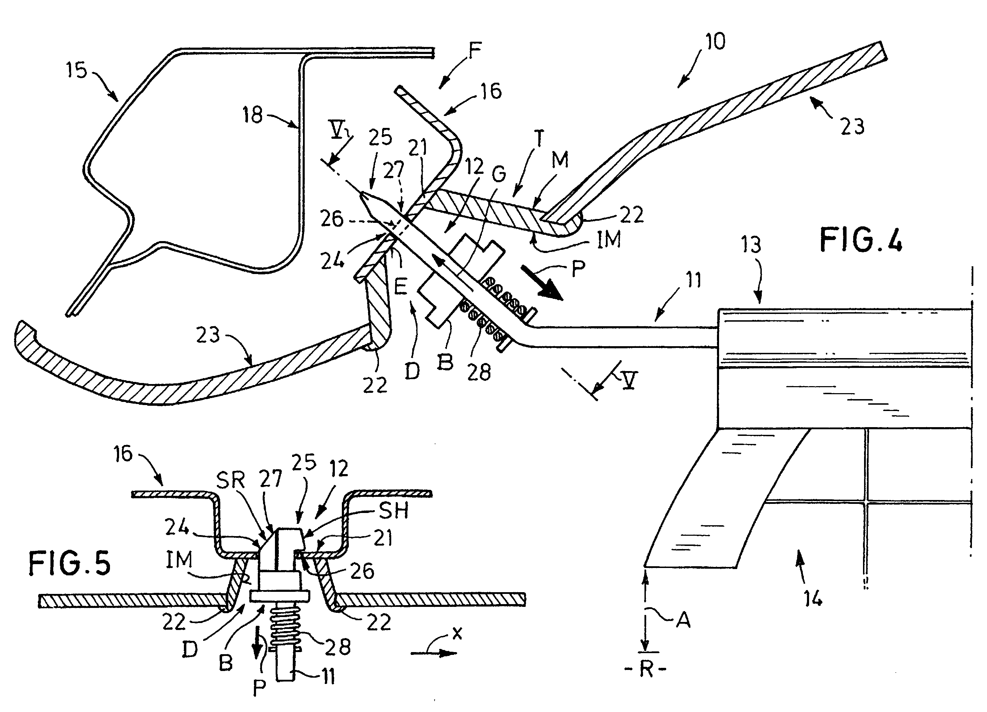

Der Vollständigkeit halber soll noch erwähnt werden, daß die Haltestange 11 in symmetrischer Anordnung diametral gegenüber ihrem jeweils in den Fig. 1 und 4 gezeigten Haltestangendende 12 über ein zweites gleichgestaltetes, nicht dargestelltes Haltestangenende 12 verfügt, welches in analoger Weise mit einer fahrzeugseitigen Befestigungsstelle F zusammenwirkt.

Auf dem Dachholm-Blechteil 18 ist ein Einführtrichter T befestigt, welcher einen umlaufend geschlossen ausgebildeten Trichtermantel M aufweist und dessen Trichteröffnung D dem Rollogehäuse R zugekehrt ist. Mit dem Trichtermantel M gemäß den Fig. 1-3 einstückig stoffschlüssig verbunden ist ein Trichterboden 21. Das Trichtertiefste E ist daher im vorliegenden Falle von der in Richtung Rollogehäuse R weisenden Bodenfläche des Trichterbodens 21 gebildet.

Der umlaufende Außenrand 22 des zweckmäßig ein Kunststoffspritzgußteil darstellenden Einführtrichters T stützt sich auf der Innenkontur des Fahrzeughimmels 23 ab.

Die Innenmantelfläche IM des Einführtrichters T bildet eine Einführhilfe bei der Montagebefestigung des Haltestangenendes 12, derart, daß die Steckmuffe 20 unwillkürlich zielgenau über die Schließöse 17 hinweggeführt wird. Dabei kann, wie bei Sicherheitsgurtverschlüssen üblich, das Eingreifen des Riegelteils in die Rastöffnung 19 der Schließöse 17 mittels einer sich durch die Einführbewegung der Steckmuffe spannenden und wieder entspannenden Feder automatisch erfolgen.

Das Ausführungsbeispiel entsprechend den Fig. 4 und 5 unterscheidet sich von dem gemäß den Fig. 1-3 durch eine abgewandelte Form des Haltestangendendes 12 und der fahrzeugseitigen Befestigungsstelle F.

Das in nicht näher gezeigter Weise am Dachholm 15 befestigte Blech 16 bildet den Trichterboden 21 des Einführtrichters T. In dem durch das Blech 16 gebildeten Trichterboden 21 ist eine das matrizenartige Steckelement darstellende Rastöffnung 24 vorgesehen.

Die Haltestange 11 bildet im Bereich ihres Haltestangenendes 12 einen rechteckigen Querschnitt, welcher zu einem Haken 25 verformt ist. Der durch die Rastöffnung 24 hindurchgestecke Haken 25 hintergreift mit seiner Hakenfläche 26 den vom Blech 16 gebildeten Trichterboden 21.

Zur Verriegelung der Hakenfläche 26 in der in den Fig. 4 und 5 gezeigten Verriegelungsstellung der Anordnung durchgreift ein Riegelfortsatz 27 einen vom Haken 25 freigelassenen Teil der Rastöffnung 24. Auf diese Weise ist der Haken 25 in seiner Verriegelungsstellung festgelegt. Einstückig mit dem Riegelfortsatz 27 verbunden ist ein hülsenartiges Betätigungsteil B, welches entsprechend dem Pfeil P gemeinsam mit dem Riegelfortsatz 27 entgegen der Rückstellkraft einer die Haltestange 11 umhüllenden Schraubendruckfeder 28 gleitverschoben werden kann, um ein Lösen des Hakens 25 aus seiner in den Fig. 4 und 5 gezeigten Verriegelungsstellung herbeizuführen.

Auch beim Ausführungsbeispiel entsprechend den Fig. 4 und 5 ist der Trichter T mit seiner Innenmantelfläche IM so zu gestalten, daß der patrizenförmige Haken 25 des Haltestangenendes 12 unwillkürlich zielgenau in die Rastöffnung 24 hineingleitet, um eine bequeme Befestigung der Haltestange 11 in der jeweiligen fahrzeugseitigen Befestigungsstelle F zu gewährleisten.

Das Einsetzen des Haltestangenendes 12 geschieht dabei folgendermaßen: nachdem das Haltestangenende 12 in Einführrichtung G in den Trichter T hineingeglitten ist, stoßen die Schrägfläche SR des Riegelfortsatzes 27 und die Schrägfläche SH des Hakens 25 gegen den Rand der Rastöffnung 24. Dabei gibt die Schraubendruckfeder 28 nach, so daß der zurückbleibende Riegelfortsatz 27 dem an ihm entlanggleitenden Haken 25 zunächst Platz macht. Also kann der Haken 25 die Rastöffnung 24 gänzlich durchdringen, worauf die von der Feder 28 druckbeaufschlagte Schrägfläche SR eine radiale Verdrängung des Hakens 25 bewirkt, wodurch die Hakenfläche 26 in ihre Verriegelungsstellung mit der Rückseite des Trichterbodens 21 versetzt wird.

Die Fahrzeug-Fahrtrichtung ist in den Fig. 2 und 5 mit x angegeben.

## Patentansprüche

1. Trenn- und/oder Rückhaltevorrichtung (10) für Fahrzeuge, wie für Kombinationskraftwagen od.dgl., mit einer von einer Aufnahme-Halterung (R), insbesondere etwa vertikal, ausziehbaren Werkstoffbahn (14), wie Netzbahn od.dgl., mit einer Haltestange (11), die zwei Haltestangenenden (12) aufweist, welche jeweils mit einer fahrzeugseitigen Befestigungsstelle (F) eine je ein matrizenförmiges und ein patrizenförmiges Steckelement aufweisende lösbare Steckverbindung bilden, **gekennzeichnet durch** folgende Merkmale:
a) die fahrzeugseitige Befestigungsstelle (F) weist einen sich in Einführrichtung (G) des zugeordneten Haltestangenendes (12) verengenden Einführtrichter (T) auf;
b) in der Trichterspitze oder auf dem Trichterboden (21) ist ein Steckelement (17; 24) angeordnet;
c) mit dem Steckelement (17; 24) in der Trichterspitze oder auf dem Trichterboden (21) wirkt ein von dem zugehörigen Haltestangenende (12) gebildetes komplementäres Steckelement (20; 25) zusammen, welchem ein, insbesondere translatorisch, bewegliches Riegelelement (27) zugeordnet ist;
d) das Riegelelement (27) ist mindestens mittelbar auf oder an dem Haltestangenende (12) geführt und in seine Verriegelungsstellung hinein federbelastet.

2. Trenn- und/oder Rückhaltevorrichtung nach Anspruch 1, **dadurch gekennzeichnet, daß** dem Riegelement (27) haltestangenseitig eine Betätigungshandhabe (B) zugeordnet ist.

3. Trenn- und/oder Rückhaltevorrichtung nach Anspruch 1 oder nach Anspruch 2, **dadurch gekennzeichnet, daß** das Steckelement (24; 20) matrizenförmig oder patrizenförmig und das komplementäre Steckelement (25; 17) patrizenförmig oder matrizenförmig ausgebildet ist.

4. Trenn- und/oder Rückhaltevorrichtung nach einem der Ansprüche 1 bis 3, **dadurch gekennzeichnet, daß** aus dem Tiefsten des Einführtrichters (T) als patrizenförmiges Steckelement eine Stecköse (17) vorragt, mit welcher ein am Haltestangenende (12) angeordnetes matrizenartiges hülsen- oder muffenförmiges Bauteil (20) zusammenwirkt, welches ein in seine Verriegelungsstellung mit der Stecköse (17) hinein belastetes Riegelement enthält.

5. Trenn- und/oder Rückhaltevorrichtung nach Anspruch 4, **dadurch gekennzeichnet, daß** die Stecköse (17) ein aus einem fahrzeugseitig befestigten Blechteil zungenartig herausgebogenes Ösenteil ist.

6. Trenn- und/oder Rückhaltevorrichtung nach einem der Ansprüche 1 bis 3, **dadurch gekennzeichnet, daß** im Tiefsten des Einführtrichters (T) als matrizenartiges Steckelement eine sich etwa quer zur Achse des Einführtrichters (T) erstreckende, eine Rastöffnung (24) bildende Aussparung vorgesehen ist, welche in der Verriegelungsstellung der Steckverbindung von einem hakenförmig ausgebildeten Haltestangenende (25) hintergriffen ist.

7. Trenn- und/oder Rückhaltevorrichtung nach Anspruch 6, **dadurch gekennzeichnet, daß** dem hakenförmig ausgebildeten Haltestangenende (25) ein Riegelement in Form eines Schieberiegels (27) zugeordnet ist.

8. Trenn- und/oder Rückhaltevorrichtung nach Anspruch 7, **dadurch gekennzeichnet, daß** der Schieberiegel (27) an der einer Hakenfläche (26) abgewandten Mantelfläche der Haltestange (12) letztere innerhalb der Rastöffnung (24) hintergreift und so eine Aushakbewegung des Haltestangenendes (12) aus der Rastöffnung (24) lösbar blockiert.

9. Trenn- und/oder Rückhaltevorrichtung nach Anspruch 7 oder nach Anspruch 8, **dadurch gekennzeichnet, daß** der Schieberiegel (27) in seine Verriegelungsstellung hinein federbelastet (28) ist.

10. Trenn- und/oder Rückhaltevorrichtung nach Anspruch 8 oder nach Anspruch 9, **dadurch gekennzeichnet, daß** die Rastöffnung (24) von einem fahrzeugseitig befestigten Blech (16) gebildet ist, welches zugleich den Boden (21) bzw. das Tiefste des Einführtrichters (T) bildet.

11. Trenn- und/oder Rückhaltevorrichtung nach einem der Ansprüche 1 bis 10, **dadurch gekennzeichnet, daß** der Einführtrichter (T) einen im wesentlichen geschlossen umlaufenden Trichtermantel (M) aufweist.

## Claims

1. Separating and/or restraining device (10) for vehicles, such as estate cars or the like, the said device having a web of material (14), such as a web of netting or the like, which can be pulled out, in particular approximately vertically, from a receptacle/mounting (R) and has a holding bar (11) which has two ends (12) of the latter which each form, with a fastening point (F) on the vehicle, a releasable plug-in connection having a matrix-shaped plug-in element and a patrix-shaped plug-in element in each case, **characterised by** the following features:
a) the fastening point (F) on the vehicle has a lead-in funnel (T) which narrows in the direction of introduction (G) of the associated end (12) of the holding bar;
b) a plug-in element (17; 24) is disposed in the point of the funnel or on the base (21) of the latter;
c) a complementary plug-in element (20; 25), which is formed by the appertaining end (12) of the holding bar and with which a bolting element (27), which can be moved, in particular, in a translatory manner, is associated, interacts with the plug-in element (17; 24) in the point of the funnel or on the base (21) of the latter;
d) the bolting element (27) is guided, at least indirectly, on the end (12) of, or at the end (12) of the holding bar and is spring-loaded into its locking position.

2. Separating and/or restraining device according to claim 1, **characterised in that**, on the holding bar, an actuating handle (B) is associated with the bolting element (27).

3. Separating and/or restraining device according to claim 1 or according to claim 2, **characterised in that** the plug-in element (24; 20) is of matrix-shaped or patrix-shaped construction, and the complementary plug-in element (25; 17) is of patrix-shaped or matrix-shaped construction.

4. Separating and/or restraining device according to one of claims 1 to 3, **characterised in that** a plug-in eyelet (17) protrudes, as a patrix-shaped plug-in element, out of the deepest point of the lead-in funnel (T), with which eyelet there interacts a matrix-like, sleeve or collar-shaped component (20) which is disposed at the end (12) of the holding bar and which contains a bolting element which is spring-loaded into the position in which it is locked to the plug-in eyelet (17).

5. Separating and/or restraining device according to claim 4, **characterised in that** the plug-in eyelet (17) is an eyelet part which is bent, after the fashion of a tongue, out of a sheet-metal part fastened on the vehicle.

6. Separating and/or restraining device according to one of claims 1 to 3, **characterised in that** there is provided in the deepest point of the lead-in funnel (T), as a matrix-like plug-in element, a clearance which extends approximately transversely to the axis of the said lead-in funnel (T) and forms a latching aperture (24) and behind which an end (25) of the holding bar, which end is of hook-shaped construction, engages when the plug-in connection is in the locking position.

7. Separating and/or restraining device according to claim 6, **characterised in that** a bolting element in the form of a sliding bolt (27) is associated with the end (25) of the holding bar, which end is of hook-shaped construction.

8. Separating and/or restraining device according to claim 7, **characterised in that** the sliding bolt (27) engages, on that superficies of the holding bar (12) which faces away from a hooked face (26), behind the said holding bar inside the latching aperture (24) and thus blocks, in a releasable manner, an unhooking movement of the holding bar end (12) from the latching aperture (24).

9. Separating and/or restraining device according to claim 7 or according to claim 8, **characterised in that** the sliding bolt (27) is spring-loaded (28) into its locking position.

10. Separating and/or restraining device according to claim 8 or according to claim 9, **characterised in that** the latching aperture (24) is formed by a metal sheet (16) which is fastened on the vehicle and which, at the same time, forms the base (21) or the deepest point of the lead-in funnel (T).

11. Separating and/or restraining device according to one of claims 1 to 10, **characterised in that** the lead-in funnel (T) has an essentially closed, circumferential funnel casing (M).

## Revendications

1. Dispositif de séparation et/ou de retenue (10) pour des véhicules, tel que des véhicules motorisés type break ou analogues, comportant une bande de matériau (14), extractible, en particulier à peu verticalement, depuis un dispositif de fixation et de logement (R), tel qu'une bande de filet ou analogue, avec une barre de retenue (11) présentant deux extrémités de barre de retenue (12), formant chacune, avec un point de fixation (F) situé côté véhicule, une liaison à enfichage désolidarisable, présentant un élément d'enfichage à forme femelle et un élément d'enfichage à forme mâle, **caractérisé par** les propriétés suivantes :
a) le point de fixation (F) situé côté véhicule présente un entonnoir d'introduction (T) allant en rétrécissant dans la direction d'introduction (G) de l'extrémité de tige de maintien (12) associée ;
b) un élément d'enfichage (17 ; 24) est disposé dans la pointe d'entonnoir ou sur le fond d'entonnoir (21) ;
c) avec l'élément d'enfichage (17, 24) dans la pointe d'entonnoir ou sur le fond d'entonnoir (21), coopère un élément d'enfichage (20 ; 35) complémentaire formé par l'extrémité de tige de maintien (12) afférente, auquel est associé un élément de verrouillage (27) mobile, en particulier mobile en translation ;
d) l'élément de verrouillage (27) est guidé au moins indirectement sur ou contre l'extrémité de tige de maintien (12) et est chargé par un ressort lorsqu'il est à sa position de verrouillage.

2. Dispositif de séparation et/ou de retenue selon la revendication 1, **caractérisé en ce qu'**une manette d'actionnement (B) est associée, côté tige de maintien, à l'élément de verrouillage (27).

3. Dispositif de séparation et/ou de retenue selon la revendication 1 ou la revendication 2, **caractérisé en ce que** l'élément d'enfichage (24 ; 30) est en forme de pièce femelle ou en forme de pièce mâle et l'élément d'enfichage (25 ; 17) complémentaire est réalisé en forme de pièce mâle ou en forme de pièce femelle.

4. Dispositif de séparation et/ou de retenue selon l'une des revendications 1 à 3, **caractérisé en ce que**, à partir du point le plus profond de l'entonnoir d'insertion (T) fait saillie, à titre d'élément d'enfichage en forme de partie mâle, un oeillet d'enfichage (17) avec lequel coopère un composant (20) en forme de douille ou de manchon, du genre d'une matrice, disposé sur l'extrémité de tige de maintien (12), composant contenant un élément de verrouillage chargé par un ressort lorsqu'il est à sa position de verrouillage avec l'oeillet d'enfichage (17).

5. Dispositif de séparation et/ou de retenue selon la revendication 4, **caractérisé en ce que** l'oeillet d'enfichage (17) est une partie d'oeillet sortie en étant coulée en languette obtenue à partir d'une pièce en tôle fixée côté véhicule.

6. Dispositif de séparation et/ou de retenue selon l'une des revendications 1 à 3, **caractérisé en ce qu'**au point le plus profond de l'entonnoir d'insertion (T), est prévu, à titre d'élément d'enfichage d'une matrice, un évidement s'étendant à peu près transversalement par rapport à l'axe de l'entonnoir d'insertion (T) et formant une ouverture d'encliquetage (24), évidement qui est saisi par l'arrière à la position de verrouillage de la liaison à enfichage par une extrémité de tige de maintien (25) en forme de crochet.

7. Dispositif de séparation et/ou de retenue selon la revendication 6, **caractérisé en ce qu'**un élément de verrouillage ayant la forme d'un verrou coulissant (27) est associé à l'extrémité de tige de maintien (25) en forme de crochet.

8. Dispositif de séparation et/ou de retenue selon la revendication 7, **caractérisé en ce que** le verrou coulissant (27) saisit par l'arrière, sur la face d'enveloppe, opposée à une face de crochet (26), de la tige de maintien (12), cette dernière à l'intérieur de l'ouverture d'encliquetage (24) et bloque ainsi de façon désolidarisable un déplacement de décrochage faisant sortir l'extrémité de tige de maintien (12) hors de l'ouverture d'encliquetage (24).

9. Dispositif de séparation et/ou de retenue selon la revendication 7 ou la revendication 8, **caractérisé en ce que** le verrou coulissant (27) est chargé par un ressort (28) lorsqu'il est à sa position de verrouillage.

10. Dispositif de séparation et/ou de retenue selon la revendication 8 ou la revendication 9, **caractérisé en ce que** l'ouverture d'encliquetage (24) est formée par une tôle (16) fixée côté véhicule, qui forme en même temps le fond (21) ou le point le plus profond de l'entonnoir d'insertion (T).

11. Dispositif de séparation et/ou de retenue selon l'une des revendications 1 à 10, **caractérisé en ce que** l'entonnoir d'insertion (T) présente une enveloppe d'entonnoir (M) formant un pourtour pratiquement fermé.
